# EUROPEAN PATENT SPECIFICATION

(11) **EP 0 675 643 B1**
(45) Date of publication and mention of the grant of the patent: **21.07.1999**
(21) Application number: 95104170.6
(22) Date of filing: 22.03.1995
(51) Int. Cl.: H04N 5/44, H04N 7/01

(54) **Method and apparatus for reducing conversion artefacts**
Verfahren und Gerät zur Reduzierung von Umwandlungsartefakten
Méthode et appareil de réduction d'artefacts de conversion

(30) Priority: 30.03.1994 EP 94400729
(43) Date of publication of application: 04.10.1995
(73) Proprietor: THOMSON multimedia, 92648 Boulogne Cédex (FR)
(72) Inventor: Hackett, Andrew, F-67530 Klingenthal (FR)
(74) Representative: Hartnack, Wolfgang, Dipl.-Ing.

(56) References cited:
- EP-A- 0 294 962
- EP-A- 0 567 072
- WO-A-90/15504

## Description

The present invention relates to a method and to an apparatus for reducing conversion artefacts when film source images are converted into interlace format pictures of at least doubled picture frequency.

### Background

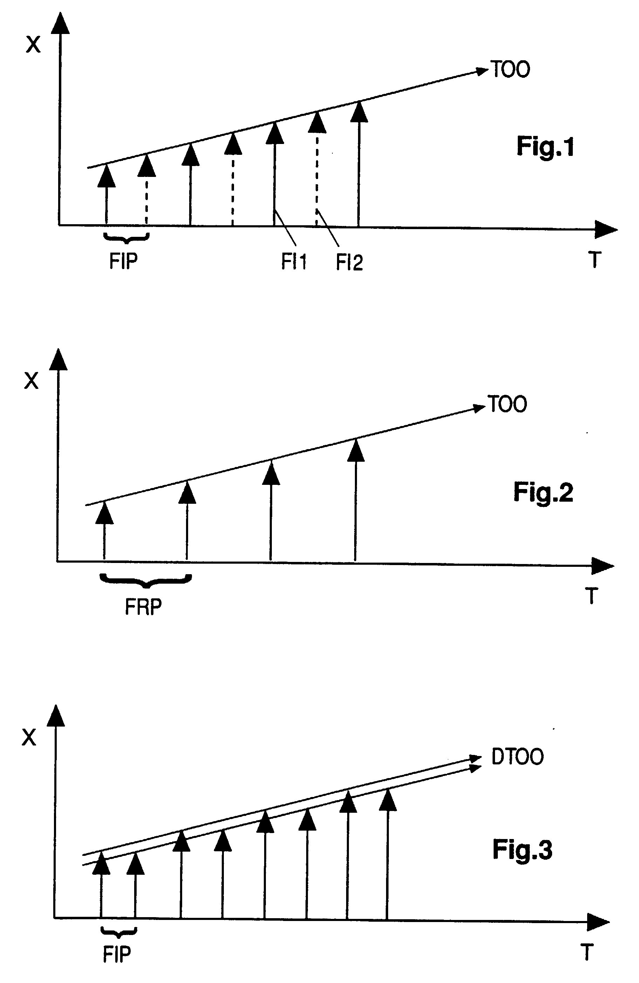

50Hz television systems transmit one complete image every 1/25th of a second, using a system known as interlace which transmits one half image every 1/50th of a second, followed by the other half image 1/50th of a second later. Television cameras also operate using this interlace system, and so the original scene captured by the camera is displayed on a receiver with no motion problems. This is represented diagrammatically in Fig. 1. Time T is shown along the horizontal axis with the parallel arrows representing the sampling of the image which consists of alternate first FI1 and second FI2 fields. In this case, one half image is sampled every 1/50th of a second, that is the field period FIP. Horizontal position X is shown along the vertical axis, and the length of the arrows represents the position of the object as it moves. By drawing a line through the tips of the arrows, the trajectory TOO of the object may be observed. For this example, an object is depicted moving horizontally with a constant velocity.

Film, on the other hand, is a sequence of complete images, generated at a rate of one new image every 24 times of a second. When film is transmitted on television, the projection rate is 25 images a second to give simple compatibility with the television system. Inaccuracies in movement speed and audio pitch are ignored. This is shown in Fig. 2 using the same conventions as for Fig. 1 and a frame period FRP. The same trajectory TOO is traced by the object as it moves across the image.
When film is transmitted by television, the same frame of film is used to generate both interlace television fields. This results in the information carried by the second field being temporally displaced from the original by 20ms. This is shown in Fig. 3. This displacement gives rise to two perceptible artefacts in the received image.
The first is a double image, and arises from the expectancy of the human visual system that objects move with a constant or smoothly changing velocity. The brain perceives two objects moving with the same velocity, separated by the distance which the original object travels in 20ms. This is represented by the double trajectory DTOO drawn through the tips of the arrows.
The second artefact is that of judder, caused by the apparent updating of the position of each object only once every 1/25th of a second, a time interval sufficiently long for individual images to be perceived as such rather than combining together to give the appearance of smooth motion.

### Invention

It is one object of the invention to disclose a method for reducing or even eliminating motion judder when progressive source images are displayed in interlace format. This object is reached by the method disclosed in claim 1.

It is a further object of the invention to disclose an apparatus which utilises the inventive method. This object is reached by the apparatus disclosed in claim 7.

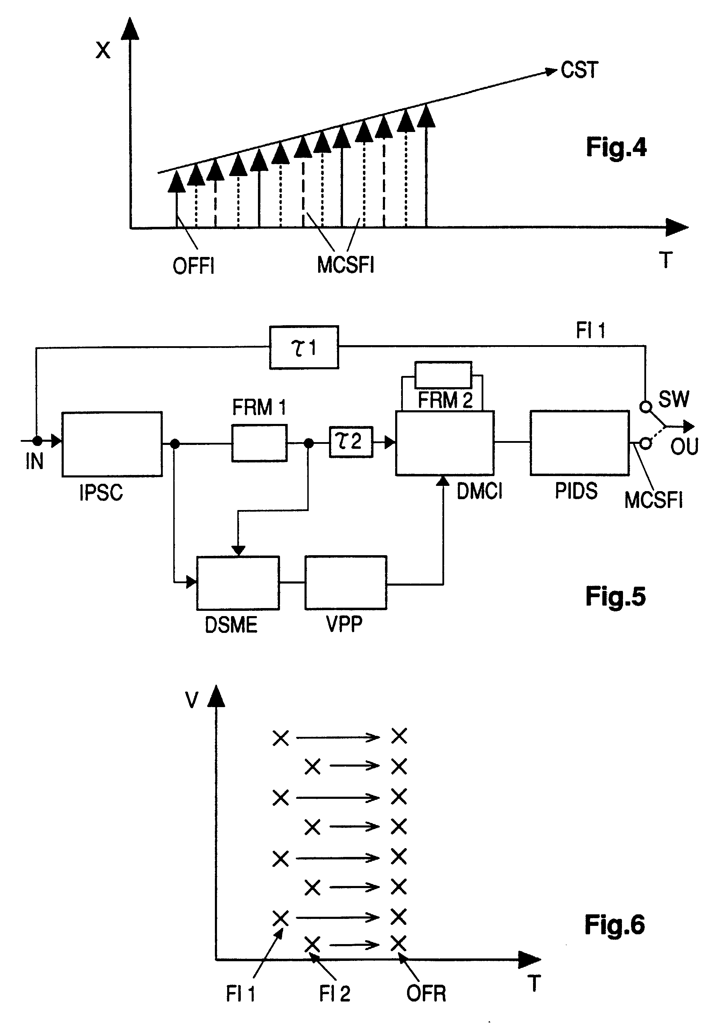

This invention is suited for the removal of film judder in TV systems and may be applied either in a television receiver or video signal decoder or in the television studio before the television signal is transmitted.
To overcome these defects the intermediate fields are generated from the original film frames by a process of motion compensated interpolation. The motion compensation measures the velocities of moving objects and generates the intermediate fields having moving objects correctly positioned so as to remove the above mentioned artefacts and to create, in this example, a single corrected trajectory CST. This is shown in Fig. 4. Each original first field OFFI is followed by a motion compensated second field MCSFI depicted by a dashed line. Advantageously, the invention can be used for 100Hz upconversion of a film source, suitable for display on a TV receiver with 100Hz scanning. In this case each original first field OFFI is followed by three interpolated fields MCSFI (dashed and dotted lines).

In principle, the inventive method is suited for reducing conversion artefacts when film source images are converted into interlace format of at least doubled picture frequency, wherein motion compensated fields of one type of said interlace format - e.g. second fields - are generated between non-motion compensated fields of the other type - e.g. first fields - of said interlace format.

In principle, the inventive apparatus is suited for reducing conversion artefacts when film source images are converted into interlace format of at least doubled picture frequency and includes:
- interlace-to-progressive converter means which reconvert each pair of interlaced fields to form a progressive signal corresponding to a frame of the original film source image;
- motion estimation means which calculate motion vectors for each pixel in said recreated images;
- subsequent vector post-processing means which correct the motion vectors calculated in said motion estimation means;
- double sided motion compensated interpolation means which operate on the appropriately delayed recreated images using said corrected motion vectors;
- switching means which provide the output signal either from an appr priately delayed input field or from a processed image from said interpolation means.

Advantageous additional embodiments of the inventive apparatus are resulting from the respective dependent claim.

### Drawings

Preferred embodiments of the invention are described with reference to the accompanying drawings, which show in:
- Fig. 1: trajectory of a moving object in case of interlaced images from a camera source;
- Fig. 2: trajectory of a moving object in case of images from a film source;
- Fig. 3: trajectory of a moving object in case of interlace-displayed images from a film source;
- Fig. 4: corrected trajectory of a moving object in case of interlace-displayed images from a film source, wherein every second field or three of four fields are motion compensated;
- Fig. 5: inventive apparatus;
- Fig. 6: progressive scan generation from film source being transmitted with interlaced pictures;
- Fig. 7: two-sided block matching;
- Fig. 8: double sided motion compensation.

### Preferred embodiments

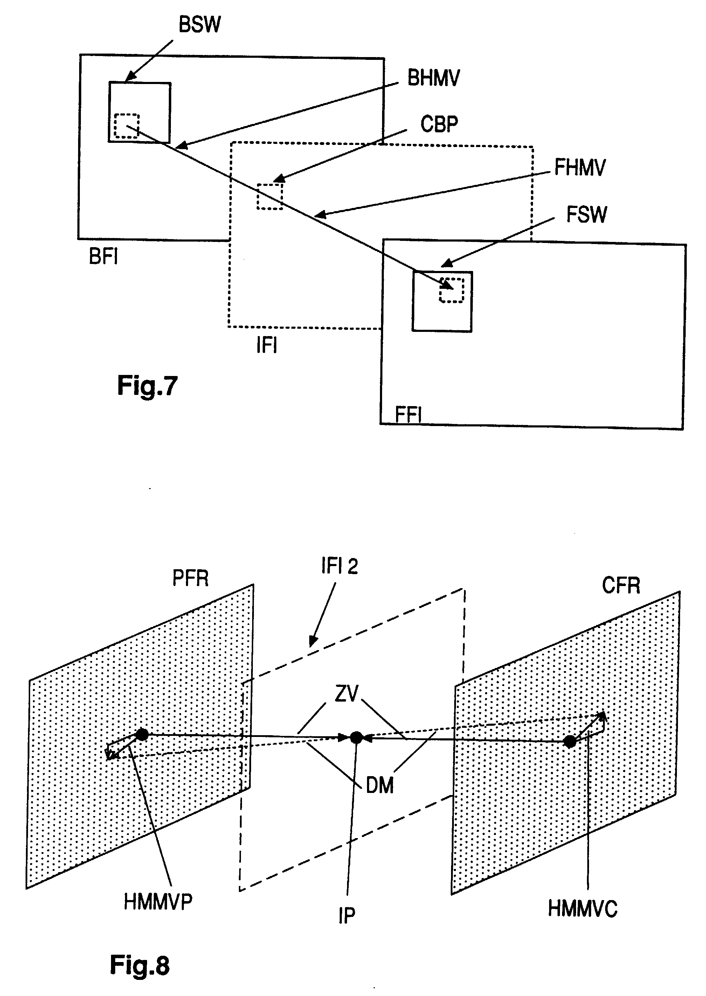

One implementation of an inventive apparatus is shown in Fig. 5. In a studio environment this would be placed on the output of a telecine or other film projection device. In a television receiver this would be enabled when film was being transmitted, either by a signalling means external to the video signal, or by a film mode detector, for example that described in EP-A-0567072. In this detector it is checked for every vertically adjacent pixel pair, if the amplitudes of the vertically intermediate pixels of the both adjacent fields lay between the amplitudes of the pixel pair. These comparison results are combined within each field. For setting film mode the combination results must be equal to a specific pattern within a distinct number of fields. The reset criterion is less strong. Within a distinct number of fields a specific number of 'wrong' combination results may occur. The film mode is switched off if this specific number is exceeded.
The first field, or half image, OFFI of the input signal IN contains the information in the correct temporal position. This field undergoes no further processing and is output directly after a suitable compensating delay τ1. The motion compensated second field MCSFI is generated by the subsequent processing.
The first processing step is to combine the two received fields in interlace-to-progressive converter means IPCS to recreate the original film image. The function of IPCS is depicted in Fig. 6. Time T is again represented by the horizontal axis. The vertical axis represents the vertical position V. It can be seen that the progressive scan image output frame OFR is recreated by delaying the first field FI1 with respect to the second field FI2 by one field period FIP.
The next step in the process is to calculate the motion of each point in the image within motion estimation means DSME. This may be done by a number of different means, using different types of motion estimation and a frame memory FRM1. As long as the result of the process is a motion vector associated with each point in the image, centred on the temporal position of the desired output field MCSFI, the precise means to provide these vectors is unimportant, aside from the fact that different methods will provide different levels of performance for different costs.
In the embodiment described here, this motion estimation is done using double sided motion estimation based on the luminance signal, described fully in WO-A-95/07591 of the applicant. Essentially, this is a full search block matching process with the search window centered on the current block position CBP of the interpolated output field IFI, as shown in Fig. 7. The backward half of the motion vector BHMV has a landing point within the backward search window BSW of a backward field BFI. The forward half of the motion vector FHMV has a landing point within the forward search window FSW of a forward field FFI.
Each successive pixel block CBP of a current field or frame IFI is matched with respective candidate pixel blocks within search window BSW - which has a preselected window width - of the backward field or frame having a half of said preselected width and with the corresponding pixel blocks within the corresponding search window FSW of the forward field or frame having a half of said preselected width in order to select a motion vector, the first part of which is related to the location of the best matching block of the backward field or frame and the second part of which is related to the location of the best matching block of the forward field or frame, whereby the current position of said search windows BSW and FSW is related to the position of the current pixel block of said current field or frame.

The result of this block matching yields a number of candidate vectors for each block which are then post-processed in subsequent vector post-processing means VPP. In this means, the motion vectors are corrected, i.e. are made reasonable, and smoothed.
This can be performed as described in EP-A-0 648 052 of the applicant to provide a final output vector for each pixel, representing the best estimate of the motion of that pixel. For this estimation a motion vector related to each block is calculated and for any pixel of the current block, a pixel motion vector is calculated using four motion vectors, that is the motion vector of the current block and the motion vectors of the three adjacent blocks.
For any pixel from error values related to the four block motion vectors several estimated errors can be calculated, taking into account the position of the pixel relative to the centre of each of the corresponding blocks, whereby the minimum of said estimated errors is taken to select the related of said four block motion vectors as the final motion vector for said pixel.

Advantageously, the post-processing means VPP may also attempt to correct for the effects of repeated structures as described in EP-A-0 647 919 and localise the block based motion vectors to provide one motion vector per pixel.
Such correction of motion vectors includes the following steps:
- evaluating error values which are related to a matching of said pixel blocks between different pictures of said video signal, whereby, additional to a basic minimum error, a further minimum error belonging to adjacent pixel positions, except directly adjacent pixel positions, is searched along the row, or column, containing the pixel position of said basic minimum error;
- comparing said further minimum error with a preselected threshold, resulting in a periodic structure decision if such further minimum error is less then said threshold;
- when a periodic structure in the picture content is detected, replacing the current motion vector corresponding to said basic minimum error by a motion vector of an adjacent pixel block, in particular either from the block to the left or from the block above, whichever yields the smaller error in the current block, or by taking the mean of these both vectors.

In addition, a measure of confidence of the motion vector can be generated in VPP on a pixel by pixel basis as described in EP-A-0 648 047 of the applicant. When the confidence is low, there is a high probability that the motion vector is incorrect (for example, on material newly uncovered by the passage of a moving object for which no motion information can be correctly found). In this case, a default motion vector of 0 in both the horizontal and vertical directions is taken.
For such measure of confidence, signal paths with different interpolation processing - in particular motion compensated interpolation and fallback interpolation - are formed, whereby the output signals of said different signal paths are combined in relation to a measure of confidence which is derived from a minimum motion estimation error of the input video signal, which is in particular block based.

DSME may use a non-uniform measurement of candidate motion vectors as described in EP-A-0 639 926 of the applicant to calculate the motion vectors. The accuracy of this measurement is made non-uniform within the search window by dividing the window into, at least, an area of high precision and an area of lower precision, whereby the density of the used pixel values of the input signal for the motion vector calculation is less than in the area of less precision.

The range of the search in both the horizontal and vertical directions is only limited by constraints of cost and complexity.

The output vectors of VPP are applied to double sided motion compensated interpolation means DMCI, shown in more detail in Fig. 8, which may use a further frame memory FRM2 and which generate from the appropriately delayed (further delay means τ2) progressive picture signal a motion compensated output image IFI2 (progressive frame or field) in the temporal position of the second field FI2 of the television image. Each output pixel IP at the position of zero vector ZV is the average of one pixel in the current film frame CFR and one pixel in the previous film frame PFR. The two pixels used in the average are selected by applying the measured motion vector (one half HMMVP in frame PFR and one half HMMVC in frame CFR) for the desired output pixel. If this vector represents accurately the direction of motion DM, these two pixels will correspond to the same part of the same object in each frame.
As shown in this embodiment, a complete progressively scanned image can be generated in the position of field FI2. In case of 100Hz output DMCI interpolates three intermediate motion compensated output images IFI2 (progressive frames or fields), whereby respective percentages of the components of the motion vectors can be applied to the interpolation of a specific of the three images.
The final step, which may be combined in the interpolator DMCI by directly interpolating a field or three fields only, respectively, is to produce the output field, or fields, MCSFI from the interpolated information. This is done by taking every second line from the progressive image.
Switch means SW select either field FI1 or the newly generated field, or fields, MCSFI at the output OU of the inventive apparatus depending on the field being transmitted.

Colour information can be handled in exactly the same way as luminance for the interpolation process, using the motion vectors derived for the luminance signal.

The invention can also be used in a video signal decoder (TV, VCR, PC, CD-I, CD Video) if the transmitted or recorded signals have been coded using data reduction, e.g. MPEG1 or MPEG2. In such cases the transmitted/recorded motion information can be used in, or instead of, circuits DSME and/or VPP.

In case of other film picture rates or field rates (120Hz) the numbers given can be adapted correspondingly.

When implementing the referenced matters into the invention the length of the therein-described field and frame delays is adapted correspondingly.

The order of usage of the fields can be exchanged, i.e. field OFFI can be the second field FI2.

## Claims

1. Method for reducing conversion artefacts (DTOO) when film source images are converted into interlace format of at least doubled picture frequency, **characterised** in that motion compensated fields (MCSFI) of one type of said interlace format - e.g. second fields (FI2) - are generated (DMCI, PIDS, SW) between non-motion compensated fields (OFFI) of the other type - e.g. first fields (FI1) - of said interlace format.

2. Method according to claim 1, wherein three motion compensated fields (MCSFI) are generated between each pair of said non-motion compensated fields (OFFI).

3. Method according to claim 1 or 2, wherein said generation of motion compensated fields (MCSFI) takes place in a television receiver or video recorder or video decoder for correction after transmission or takes place in a studio for correction before transmission or recording.

4. Method according to any of claims 1 to 3, wherein for determining (DSME) motion information for said motion compensation a full search block matching is performed with the search window centered on the current block position (CBP) of the interpolated output field (IFI), and wherein the backward half of the motion vector (BHMV) has a landing point within the backward search window (BSW) of a backward field (BFI) and the forward half of the motion vector (FHMV) has a landing point within the forward search window (FSW) of a forward field (FFI).

5. Method according to any of claims 1 to 4, wherein said generation of motion compensated fields (MCSFI) is performed (DMCI, FRM2, PIDS) using double sided motion compensated interpolation.

6. Method according to any of claims 1 to 5, wherein said film source images have been digitally coded using data reduction and respectively decoded prior to said conversion, in particular by using MPEG1 or MPEG2 coding and by using the motion information related to this coding for said motion compensation.

7. Apparatus for reducing conversion artefacts (DTOO) when film source images are converted into interlace format of at least doubled picture frequency, using the method according to any of claims 1 to 6 and including:
- interlace-to-progressive converter means (IPCS) which reconvert each pair of interlaced fields to form a progressive signal corresponding to a frame of the original film source image (OFR);
- motion estimation means (DSME, FRM1) which calculate motion vectors for each pixel in said recreated images (OFR);
- subsequent vector post-processing means (VPP) which correct the motion vectors calculated in said motion estimation means;
- double sided motion compensated interpolation means (DMCI) which operate on the appropriately delayed (τ2) recreated images (OFR) using said corrected motion vectors;
- switching means (SW) which provide the output signal either from an appropriately delayed (τ1) input field (IN) or from a processed image from said interpolation means (DMCI, PIDS).

8. Apparatus according to claim 7, wherein in said motion estimation means (DSME, FRM1) a full search block matching is performed with the search window centered on the current block position (CBP) of the interpolated output field (IFI), and wherein the backward half of the motion vector (BHMV) has a landing point within the backward search window (BSW) of a backward field (BFI) and the forward half of the motion vector (FHMV) has a landing point within the forward search window (FSW) of a forward field (FFI).

## Patentansprüche

1. Verfahren zur Verminderung von Umwandlungs-Artefakten (DT00), wenn Bilder von einer Filmquelle in das Zeilensprungformat mit wenigstens der doppelten Bildfrequenz umgewandelt werden, dadurch gekennzeichnet, daß bewegungskompensierte Halbbilder (MCSFI) von einem Typ des Zeilensprungformats - z.B. zweite Halbbilder (FI2) - zwischen nicht bewegungskompensierten Halbbildern (OFFI) des anderen Typs - z.B. erste Halbbilder (FI1) - des Zeilensprungformats erzeugt werden (DMCI, PIDS, SW).

2. Verfahren nach Anspruch 1, bei dem drei bewegungskompensierte Halbbilder (MCSFI) zwischen jedem Paar der nicht bewegungskompensierten Halbbilder (OFFI) erzeugt werden.

3. Verfahren nach Anspruch 1 oder 2, bei dem die Erzeugung der bewegungskompensierten Halbbilder (MCSFI) in einem Fernsehempfänger oder einem Videorecorder oder einem Videodekoder zur Korrektur nach der Übertragung oder in einem Studio zur Korrektur vor der Übertragung oder Aufzeichnung stattfindet.

4. Verfahren nach einem der Ansprüche 1 bis 3, bei dem zur Bestimmung (DSME) der Bewegungsinformation für die Bewegungskompensation eine volle Such-Block-Anpassung ausgeführt wird, wobei das Suchfenster auf die gegenwärtige Blockposition (CBP) des interpolierten Ausgangs-Halbbildes (IFI) zentriert ist, und wobei die hintere Hälfte des Bewegungs-Vektors (BHMV) einen Landepunkt innerhalb des hinteren Suchfensters (BSW) eines hinteren Halbbildes hat und die vordere Hälfte des Bewegungs-Vektors (FHMV) einen Landepunkt innerhalb des vorderen Suchfensters (FSW) eines vorderen Halbbildes (FFI) hat.

5. Verfahren nach einem der Ansprüche 1 bis 4, bei dem die Erzeugung der bewegungskompensierten Halbbilder (MCSFI) ausgeführt wird (DMCI, FRM2, PIDS), indem eine doppelseitige bewegungskompensierte Interpolation verwendet wird.

6. Verfahren nach einem der Ansprüche 1 bis 5, bei dem die Bilder von einer Filmquelle digital unter Verwendung von Datenverminderung kodiert und entsprechend vor der Umwandlung dekodiert worden sind, insbesondere durch Verwendung einer MPEG1- oder MPEG2-Kodierung und durch Verwendung der auf diese Kodierung bezogenen Bewegungsinformationen für die Bewegungskompensation.

7. Vorrichtung zur Verminderung von Umwandlungs-Artefakten (DT00), wenn Bilder von einer Filmquelle in Zeilensprungformat mit wenigstens der doppelten Bildfrequenz unter verwendung des Verfahrens nach einem der Ansprüche 1 bis 6 umgewandelt werden, gekennzeichnet durch:
- Wandlermittel (IPCS) zur Umwandlung von Zeilensprung- in progressive Signale, die jedes Paar von Zeilensprung-Halbbildern wiederherstellen, um ein progressives Signal zu bilden, das einem Vollbild des ursprünglichen Filmquellen-Bildes (OFR) entspricht;
- Bewegungs-Abschätzungsmittel (DSME, FRM1), die für jedes Pixel in den wiederhergestellten Bildern (OFR) Bewegungs-Vektoren berechnen;
- nachfolgende Vektor-Nachverarbeitungsmittel (VPP), die die in den Bewegungs-Abschätzungsmitteln berechneten Bewegungs-Vektoren korrigieren;
- doppelseitige bewegungskompensierte Interpolationsmittel (DMCI), die auf die geeignet verzögerten (τ2) wiederhergestellten Bilder (OFR) unter Verwendung der korrigierten Bewegungs-Vektoren einwirken;
- Schaltmittel (SW), die das Ausgangssignal entweder von einem geeignet verzögerten (τ1) Eingangs-Halbbild (IN) oder von einem verarbeiteten Bild von den Interpolationsmitteln (DMCI, PIDS) erzeugen.

8. Vorrichtung nach Anspruch 7, bei der in den Bewegungs-Abschätzungsmitteln (DSME, FRM1) eine volle Suchblock-Anpassung ausgeführt wird, wobei das Suchfenster auf die gegenwärtige Blockposition (CBP) des interpolierten Ausgangs-Halbbildes (IPI) zentriert wird, und wobei die hintere Hälfte des Bewegungs-Vektors (BHMV) einen Landepunkt innerhalb des hinteren Suchfensters (BSW) eines hinteren Halbbildes (BFI) hat und die vordere Hälfte des Bewegungs-Vektors (FHMV) einen Landepunkt innerhalb des vorderen Suchfensters (FSW) eines vorderen Halbbildes hat.

## Revendications

1. Méthode de réduction d'artefacts de conversion (DTOO) quand des images sources de film sont converties en des images de format entrelacé d'une fréquence d'image au moins doublée, caractérisée en ce que des champs à mouvement compensé (MCSFI) d'un type dudit format entrelacé - p. ex. des deuxièmes champs (FI2) - sont générés (DMCI, PIDS, SW) entre des champs à mouvement non compensé (OFFI) de l'autre type - p. ex. des premiers champs (FI1) - dudit format entrelacé.

2. Méthode selon la revendication 1, dans laquelle trois champs à mouvement compensé (MCSFI) sont générés entre chaque paire desdits champs à mouvement non compensé (OFFI).

3. Méthode selon la revendication 1 ou 2, dans laquelle ladite génération de champs à mouvement compensé (MCSFI) se déroule dans un récepteur de télévision ou enregistreur vidéo ou décodeur vidéo en vue de leur correction après la transmission ou se déroule dans un studio en vue de leur correction avant la transmission ou l'enregistrement.

4. Méthode selon l'une quelconque des revendications 1 à 3, dans laquelle pour déterminer des informations de mouvement (DSME) pour ladite compensation de mouvement une recherche complète de correspondance de blocs est effectuée avec la fenêtre de recherche centrée sur la position du bloc en cours (CBP) du champ de sortie interpolé (IFI), et dans laquelle la moitié arrière du vecteur de mouvement (BHMV) a un point d'atterrissage à l'intérieur de la fenêtre de recherche arrière (BSW) d'un champ arrière (BFI) et la moitié avant du vecteur de mouvement (FHMV) a un point d'atterrissage à l'intérieur de la fenêtre de recherche avant (FSW) d'un champ avant (FFI).

5. Méthode selon l'une quelconque des revendications 1 à 4, dans laquelle ladite génération de champs à mouvement compensé (MCSFI) est effectuée (DMCI, FRM2, PIDS) en utilisant une interpolation de compensation de mouvement des deux côtés.

6. Méthode selon l'une quelconque des revendications 1 à 5, dans laquelle lesdites images sources de film ont été codées numériquement en utilisant une réduction des données et décodées respectivement avant ladite conversion, en particulier en utilisant un codage MPEG1 ou MPEG2 et en utilisant les informations de mouvement liées à ce codage pour ladite compensation de mouvement.

7. Appareil de réduction d'artefacts de conversion (DTOO) quand des images sources de film sont converties en un format entrelacé d'une fréquence d'image au moins doublée, utilisant la méthode selon l'une quelconque des revendications 1 à 6, et comportant :
- des moyens de convertisseur entrelacement/progression (IPCS) qui reconvertissent chaque paire de champs entrelacés en vue de former un signal progressif correspondant à une trame de l'image source de film initiale (OFR) ;
- des moyens d'estimation de mouvement (DSME, FRM1) qui calculent des vecteurs de mouvement pour chaque élément d'image dans lesdites images recréées (OFR) ;
- des moyens de post-traitement de vecteurs ultérieurs (VPP) qui corrigent les vecteurs de mouvement calculés dans lesdits moyens d'estimation de mouvement ;
- des moyens d'interpolation de compensation de mouvement des deux côtés (DMCI) qui fonctionnent sur les images recréées (OFR) convenablement retardées (τ2) en utilisant lesdits vecteurs de mouvement corrigés ;
- des moyens de commutation (SW) qui fournissent le signal de sortie soit à partir du champ d'entrée (IN) convenablement retardé (τ1), soit à partir d'une image traitée provenant desdits moyens d'interpolation (DMCI, PIDS).

8. Appareil selon la revendication 7, dans lequel dans lesdits moyens d'estimation de mouvement (DSME, FRM1) une recherche complète de mise en correspondance de blocs est effectuée avec la fenêtre de recherche centrée sur la position de bloc en cours (CBP) du champ de sortie interpolé (IFI), et dans lequel la moitié arrière du vecteur de mouvement (BHMV) a un point d'atterrissage à l'intérieur de la fenêtre de recherche arrière (BSW) d'un champ arrière (BFI) et la moitié avant du vecteur de mouvement (FHMV) a un point d'atterrissage à l'intérieur de la fenêtre de recherche avant (FSW) d'un champ avant (FFI).
